# EUROPEAN PATENT SPECIFICATION

(11) **EP 3 451 158 B1**
(45) Date of publication and mention of the grant of the patent: **06.10.2021**
(21) Application number: 16899899.5
(22) Date of filing: 04.05.2016
(51) Int. Cl.: G06F 9/30

(54) **DEVICE AND METHOD FOR GENERATING RANDOM VECTORS CONFORMING TO CERTAIN DISTRIBUTION**
VORRICHTUNG UND VERFAHREN ZUR ERZEUGUNG ZUFÄLLIGER VEKTOREN GEMÄSS EINER BESTIMMTEN VERTEILUNG
DISPOSITIF ET PROCÉDÉ DE GÉNÉRATION DE VECTEURS ALÉATOIRES CONFORMES À UNE CERTAINE DISTRIBUTION

(30) Priority: 26.04.2016 CN 201610266608
(43) Date of publication of application: 06.03.2019
(73) Proprietor: Cambricon Technologies Corporation Limited, Beijing 100190 (CN)
(72) Inventor: LIU, Daofu, Beijing 100190 (CN); ZHANG, Xiao, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/080970
(87) International publication number: WO 2017/185388

(56) References cited:
- CN-A- 101 609 715
- CN-A- 101 776 988
- CN-B- 101 515 301
- US-A1- 2004 019 619
- US-B1- 6 931 400

## Description

### TECHNICAL FIELD

The disclosure relates to the technical field of computers, and more particularly to an apparatus and a method for generating a random vector obeying a specified distribution. In embodiments of the disclosure, a random vector of any length and obeying a specified distribution can be generated according to an instruction. The disclosure includes a plurality of random distributions including but not limited to a uniform distribution and a Gaussian distribution.

### BACKGROUND

In a random vector, each value in the random vector obeys a random distribution. In a restricted Boltzmann machine of an artificial neural network, some operations are needed. For example, a vector composed of a group of neurons needs to be sampled; that is, compare each neuron in the vector with a random number. If a value of one neuron is greater than the random number, a result of comparison is taken as 1; otherwise, a result of comparison is taken as 0, which requires generating a set of random vectors consisting of random numbers obeying a distribution and having the same size as a neuron vector. For another example, when converting a 32-bit single-precision floating-point number into a 16-bit half-precision floating-point number, a truncated part of the 32-bit single-precision floating-point number needs to be compared with a random number satisfying a certain distribution if adopting a random carry method; if a bit of the truncated part is greater than the random number, the bit will be carried by 1. In this case, a set of random numbers obeying a distribution, that is, a random vector, are also required.

In the related art, one of the most common methods of generating random vectors is to generate random numbers that obeying a specified distribution one by one on a general-purpose central processing unit (CPU). However, this method can only generate one random number at a time, and is lower in efficiency when multiple random numbers are needed. Furthermore, a plurality of instructions are needed to cooperate with each other to complete the generating process when generating random numbers.

Examples of generating random vectors in the prior art may be found in US 6 931 400 B1 and CN 101 515 301 B.

### SUMMARY

In view of the above, an apparatus and a method for generating a random vector obeying a specified distribution are provided, which can generate a random vector of any length and obeying a specified distribution. A vector obeying any distributions and having any length can be generated according to an instruction.

According to an aspect of the disclosure, an apparatus for generating a random vector is provided. The apparatus includes a storing unit, a register unit, a control unit, and a random vector generating unit. The storing unit is configured to store vector data associated with a random vector generation instruction. The register unit is configured to store scalar data associated with the random vector generation instruction. The control unit is configured to decode the random vector generation instruction and to control an execution process of the random vector generation instruction. The random vector generating unit is configured to generate a random vector obeying a specified distribution according to the random vector generation instruction decoded. The random vector generating unit is a customized hardware circuit.

The scalar data stored in the register unit include a storage address of a random vector, a length of the random vector, and distribution parameters associated with the random vector generation instruction. The storage address of the random vector is an address in the storing unit.

In one implementation, the control unit includes an instruction queue module. The instruction queue module is configured to sequentially store the random vector generation instruction decoded and acquires scalar data associated with the random vector generation instruction.

In one implementation, the control unit includes a dependency relationship processing unit. The dependency relationship processing unit is configured to determine whether a current random vector generation instruction has a dependency relationship with an operation instruction that has been partially executed before the random vector generating unit acquires the current random vector generation instruction.

In one implementation, the control unit includes a storage queue module. The storage queue module is configured to temporarily store a current random vector generation instruction when the current random vector generation instruction has a dependency relationship with an operation instruction that has been partially executed and to send the current random vector generation instruction temporarily stored to the random vector generating unit when the dependency relationship is eliminated.

In one implementation, the apparatus further includes an instruction cache unit and an input-output (10) unit. The instruction cache unit is configured to store a random vector generation instruction to be executed. The IO unit is configured to store the vector data associated with the random vector generation instruction in the storing unit or to acquire the vector data associated with the random vector generation instruction from the storing unit.

In one implementation, the random vector generation instruction includes an operation code and at least one operation field. The operation code is configured to indicate to execute an operation of generating a random vector obeying a specified distribution. The operation field includes at least one of an immediate and a register number and is configured to indicate the scalar data associated with the random vector generation instruction, where the register number is configured to point to an address of the register unit.

In one implementation, the storing unit is a scratchpad memory.

According to one implementation, an apparatus for generating random vectors includes an instruction fetching module, a decoding module, an instruction queue module, a scalar register file, a dependency relationship processing unit, a storage queue module, a random vector generating unit, a scratchpad memory, and an input-output (10) access module. The instruction fetching module is configured to fetch a next random vector generation instruction to be executed from a sequence of instructions and to send the random vector generation instruction to the decoding module. The decoding module is configured to decode the random vector generation instruction and to send the random vector generation instruction decoded to the instruction queue module. The instruction queue module is configured to temporarily store the random vector generation instruction decoded, to acquire scalar data associated with the random vector generation instruction from the random vector generation instruction or the scalar register, and to send the random vector generation instruction decoded to the dependency relationship processing unit after the scalar data are acquired. The scalar register file includes a plurality of scalar registers configured to store the scalar data associated with the random vector generation instruction. The dependency relationship processing unit is configured to determine whether the random vector generation instruction has a dependency relationship with an operation instruction that has been partially executed, and to send the random vector generation instruction to a storage queue module based on a determination that the random vector generation instruction has the dependency relationship with the operation instruction that has been partially executed, or to send the random vector generation instruction to a random vector generating unit based on a determination that the current random vector generation instruction has no dependency relationship with the operation instruction that has been partially executed. The storage queue module is configured to store the random vector generation instruction that has the dependency relationship with the operation instruction that has been partially executed and to send the random vector generation instruction to the random vector generating unit after the dependency relationship is eliminated. The random vector generating unit is configured to generate a random vector obeying a specified distribution according to the random vector generation instruction. The scratchpad memory is configured to store the random vector generated. An input-output (10) access module is configured to write the random vector generated into the scratchpad memory by directly accessing the scratchpad memory.

In one implementation, the random vector generating unit is a customized hardware circuit.

According to a second aspect of the disclosure, a method for generating a random vector is provided. The method includes the following. Storing, by a storing unit, vector data associated with a random vector generation instruction. Storing, by a register unit, scalar data associated with the random vector generation instruction. Decoding, by a control unit, the random vector generation instruction. Controlling, by the control unit, an execution process of the random vector generation instruction. Generating, by a random vector generating unit being a customized hardware circuit, a random vector obeying a specified distribution according to the random vector generation instruction decoded; wherein the scalar data being stored in the register unit comprise a storage address of a random vector, a length of the random vector, and distribution parameters associated with the random vector generation instruction; wherein the storage address of the random vector is an address in the storing unit.

According to the apparatus and the method of the disclosure, a complete process of the random vector generation instruction can be realized by the customized hardware circuit, that is, the operation of generating the vector can be realized by one random vector generation instruction. In the embodiments of the disclosure, the vector data involved in the operation can be temporarily stored in the scratchpad memory, so that the vector data of different lengths can be more flexibly and effectively supported in the operation process, and the customized random number generating unit can more efficiently generate any random data obeying various distributions. According to the disclosure, one set of random vector can be generated by just one instruction.

The disclosure can be applied to the following scenarios (including but not limited to): various electronic products such as data processors, robots, computers, printers, scanners, telephones, tablets, smart terminals, mobile phones, driving recorders, navigators, sensors, cameras, cloud servers, cameras, camcorders, projectors, watches, earphones, mobile storages, and wearable devices; aircrafts, ships, cars, and other vehicles; various household appliances such as TVs, air conditioners, microwave ovens, refrigerators, rice cookers, humidifiers, washing machines, electric lights, gas stoves, and range hoods; various types of medical equipment such as nuclear magnetic resonance instruments, B-ultrasound, electrocardiographs, and so on.

### BRIEF DESCRIPTION OF THE DRAWINGS

FIG 1 is a schematic structural diagram illustrating an apparatus for generating a random vector according to an embodiment of the present disclosure.
FIG 2 is a schematic diagram illustrating a format of a random vector generation instruction according to an embodiment of the disclosure.
FIG. 3 is a schematic structural diagram illustrating an apparatus for generating a random vector according to an embodiment of the present disclosure.
FIG. 4 is a schematic flow chart illustrating a method for generating a random vector according to an embodiment of the present disclosure.

### DETAILED DESCRIPTION

To illustrate objectives, technical solutions, and advantageous effects of the disclosure more clearly, the disclosure will be further described in detail below with reference to specific embodiments of the disclosure and accompanying drawings.

An apparatus for generating a random vector is provided. The apparatus includes a storing unit, a register unit, a control unit, and a random vector generating unit. The storing unit is configured to store a vector. The register unit is configured to store a storage address of the vector and other parameters. The control unit is configured to perform a decoding operation and to control each module according to an instruction. The random vector generating unit is configured to generate a random vector that satisfies a specified distribution and has a specified length by acquiring the storage address of the vector, distribution parameters of the vector, a length of the vectors, and other parameters from the instruction or a register unit according to a random vector generation instruction. According to the disclosure, the storing unit can be a scratchpad memory, and vector data generated can be temporarily stored into the scratchpad memory, so that vector data of different lengths can be supported more flexibly and effectively during the operation and execution performance of schemes involving a larger amount of random vector data can be improved.

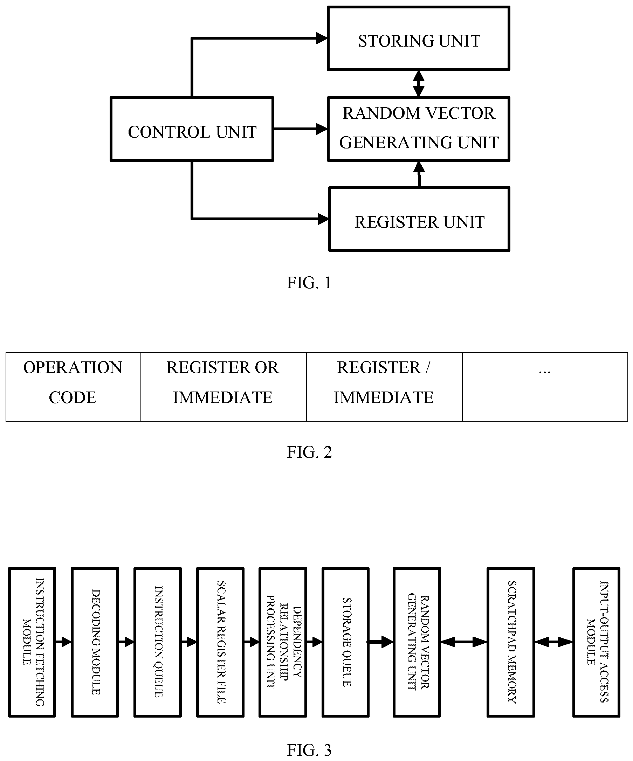

FIG. 1 is a schematic structural diagram illustrating an apparatus for generating a random vector according to an embodiment of the present disclosure. As illustrated in FIG. 1, the apparatus includes a storing unit, a register unit, a control unit, and a random vector generating unit.

The storing unit is configured to store vector data associated with a random vector generation instruction. In one implementation, the storing unit can be a scratchpad memory and can support vector data of different sizes. According to the disclosure, necessary calculation data can be temporarily stored in the scratchpad memory, so that the apparatus can more flexibly and effectively support data of different widths. The vector data associated with the random vector generation instruction includes a random vector generated. The scratchpad memory can be implemented by a plurality of different memory device such a static random-access memory (SRAM), a dynamic random access memory (DRAM), an enhanced dynamic random access memory (eDRAM), a memristor, a 3D-DRAM, a non-transitory memory or the like.

The register unit is configured to store scalar data associated with the random vector generation instruction, such as a storage address of the random vector generated. The register unit is further configured to store other scalar data used in the operation, such as distribution parameters specified by the random vector generation instruction, an upper limit and a lower limit of a uniform distribution, means and variances of a Gaussian distribution. The storage address of the random vector is an address in the storing unit.

The control unit is configured to decode the random vector generation instruction and to control an execution process of the random vector generation instruction. The control unit can control the execution process of the random vector generation instruction by controlling behaviors of each module in the apparatus. In an implementation, the control unit is configured to read out and decode a random vector generation instruction prepared to generate a control signal, and to send the control signal to other modules in the apparatus. The other modules are configured to execute corresponding operations according to the control signal.

The random vector generating unit is configured to generate a random vector that has a specified length and obeys a specified distribution according to an instruction. The random vector generating unit can be a vector operating unit which can simultaneously generate each element in a random vector. The random vector generating unit can be a customized hardware circuit including but not limited to an field-programmable gate array(FPGA), a coarse-grain reconfigurable array (CGRA), an application specific integrated circuit (ASIC), an analog circuit, a memristor and the like. The random vector generating unit can cooperated with other modules in the apparatus to generate random vectors that have any length and obey a specified distribution.

It should be noted that for the different requirements of generating the random vector, a plurality of concurrent random number generating modules may be actually included in the random vector generating unit, and each random number generating module can generate a random number in every execution operation. Therefore, a random vector may be generated by the plurality of concurrent random number generating modules continuously generating a plurality of random vector segments. In this way, a random vector having a required length can be generated. In addition, each random number generating module may include two main parts to satisfy the requirement of generating random numbers obeying any distribution.

In one embodiment, the random vector generating unit includes a linear feedback shift register (LFSR) module and a Ziggurat algorithm module.

The LFSR module is configured to generate random numbers obeying a uniform distribution and further configured to generate real random numbers by detecting thermal noise of resistors.

The Ziggurat algorithm module is configured to generate random numbers obeying any distribution (such as a Gaussian distribution). During execution, the Ziggurat algorithm module may need to invoke the LFSR module. At the beginning, modules generating random numbers obeying a uniform distribution need to be configured with random seeds, and different modules can be configured with different random seeds. According to an implementation of the disclosure, the apparatus further includes an instruction cache unit, which is configured to store operation instructions to be executed. During execution of an instruction, it is also cached in the instruction cache unit. When execution of one instruction is completed, the instruction that is the earliest one among the instruction cache unit and has not been submitted will be submitted.

According to one embodiment of the disclosure, the control unit of the apparatus further includes an instruction queue module. The instruction queue module is configured to sequentially store the random vector generation instruction decoded, to acquire scalar data, such as a specified distribution parameter, a length of a random vector, and a storage address of the random vector, associated with the random vector generation instruction through an operation field in the random vector generation instruction, and to send the random vector generation instruction to a dependency relationship processing unit after filling the scalar data into the random vector generation instruction.

According to one embodiment of the disclosure, the control unit of the apparatus further includes a dependency relationship processing unit. The dependency relationship processing unit is configured to determine whether the random vector generation instruction has a dependency relationship with an operation instruction that has been partially executed before the random vector generating unit acquires the random vector generation instruction, such as to determine whether the random vector generation instruction accesses the same storage address of a vector as the operation instruction that has been partially executed, and to store the random vector generation instruction to a storage queue module based on a determination that the random vector generation instruction has the dependency relationship with the operation instruction that has been partially executed and to send the random vector generation instruction to the random vector generating unit the previous operation instruction that has been partially executed is completed, or to directly send the random vector generation instruction to the random vector generating unit based on a determination that the random vector generation instruction has no dependency relationship with the operation instruction that has been partially executed. In particular, when a random vector generation instruction accesses the scratchpad memory, a current random vector generation instruction may access the same storage space as a previous random vector generation instruction. In order to ensure the correctness of an execution result of the random vector generation instruction, when detecting that the current random vector generation instruction has a dependency relationship with data of the previous random vector generation instruction, the current random vector generation instruction should wait in a storage queue until the dependency relationship is eliminated.

According to one embodiment of the disclosure, the control unit of the apparatus further includes a storage queue module. The storage queue module includes an ordered queue. The ordered queue is configured to temporarily store a random vector generation instruction that has a dependency relationship with data of a previous random vector generation instruction until the random vector generation instruction that has no dependency relationship with the data of the previous random vector generation instruction. The storage queue module is configured to send the random vector generation instruction to the random vector generating unit after the dependency relationship is eliminated.

According to one embodiment of the disclosure, the apparatus further includes an input-output (IO) unit. The IO unit is configured to store a random vector generated in the storing unit, and to read out vector data from a memory or write vector data into the memory.

According to one embodiment of the disclosure, in the instruction design of the present disclosure, one random vector having any length can be generated by using just an instruction.

In the process of generating a random vector by the apparatus, the apparatus may fetch an instruction for decoding, then send the instruction decoded to the instruction queue for storing and acquire all parameters in the instruction according to the decoding result, where these parameters may be directly written in the operation field of the instruction or may also be read from the specified register according to a register number in the operation field of the instruction. The advantage of using the register to store parameters is that there is no need to change the instruction itself. That is, most loops can be achieved by using the instruction to change the values in the register. It is possible to greatly save the number of instructions required for solving some practical problems. After all operands are acquired, the dependency relationship processing unit will determine whether a dependency relationship between data actually needed to be used by the instruction and data of the previous instruction exists, which will determine whether the instruction can be immediately sent to the vector operating unit for executing. For example, once the instruction has the dependency relationship with the data of the previous instruction, the instruction will not be sent to the vector operating unit for executing until the previous instruction the instruction depends on is completely executed. In the customized vector operating unit, the instruction will be executed quickly, and the result, that is a generated random vector, will be written back to an address provided by the instruction, indicating that the execution of the instruction is completed.

FIG. 2 is a schematic diagram illustrating a format of a random vector generation instruction according to an embodiment of the present disclosure. As illustrated in FIG. 2, the random vector generation instruction includes an operation code and at least one operation field. The operation code is configured to indicate to generate a random vector obeying a certain distribution, such as a Gaussian distribution or a uniform distribution. The at least one operation field is configured to indicate data information of the random vector generation instruction, where the data information can be an immediate or a register number. For example, to acquire a vector, a start address of an output vector, a length of the output vector, and distribution parameters of the output vector can be acquired from a corresponding register according to a register number, and a random vector generated according to the distribution can be stored in a specified address.

In one embodiment of the disclosure, several random vector generation instructions can be implemented.

A uniform distribution instruction (UNIF). According to the instruction, the apparatus can read out an upper limit parameter and a lower limit parameter of a uniform distribution, and a size and a storage address of a random vector to be generated from an instruction or from a register file. The random vector generating unit of the apparatus can generate a random vector obeying the uniform distribution, and write the random vector result generated back to the specified storage address in the scratchpad memory.

A Gaussian distribution instruction (GAUS). According to the instruction, the apparatus can read out a mean parameter and a variance parameter of Gaussian distribution, and a size and a storage address of a random vector to be generated from an instruction or from a register file. The random vector generating unit of the apparatus can generate a random vector obeying the Gaussian distribution, and write the random vector result generated back to the specified storage address in the scratchpad memory.

To illustrate objectives, technical solutions, and advantageous effects of the disclosure more clearly, the disclosure will be further described in detail below with reference to specific embodiments of the disclosure and accompanying drawings.

FIG. 3 is a schematic structural diagram illustrating an apparatus for generating a random vector according to an embodiment of the present disclosure. As illustrated in FIG. 3, the apparatus includes an instruction fetching module, a decoding module, an instruction queue module, a scalar register file, a dependency relationship processing unit, a storage queue module, a random vector generating unit, a scratchpad memory, and an input-output (IO) access module.

The instruction fetching module is configured to fetch a next random vector generation instruction to be executed from a sequence of instructions, and to send the random vector generation instruction to the decoding module.

The decoding module is configured to decode the random vector generation instruction and to send the random vector generation instruction decoded to the instruction queue module.

The instruction queue module is configured to temporarily store the random vector generation instruction acquired from the decoding module, to acquire scalar data associated with the random vector generation instruction from the random vector generation instruction or the scalar register, where the scalar data include a length, a storage address, and distribution parameters of the random vector generated, and to send the random vector generation instruction to the dependency relationship processing unit after the scalar data are acquired.

The scalar register file is configured to provide scalar registers required in an operation by the apparatus. Various scalar parameters can be provided directly in the operation field of the random vector generation instruction, or can be read from the scalar register file.

The dependency relationship processing unit is configured to determine a possible dependency relationship between the random vector generation instruction and an operation instruction that has been partially executed. The random vector generation instruction may access a scratchpad memory to store a random vector generated to the scratchpad memory. A current random vector generation instruction and a previous random vector generation instruction may access the same storage space. In order to ensure the correctness of an execution result of the random vector generation instruction, when detecting that the current random vector generation instruction has a dependency relationship with data of the previous random vector generation instruction, the current random vector generation instruction must may need to be sent to the storage queue module and wait until the dependency relationship is eliminated. That is, the dependency relationship processing unit is configured to detect whether a storage interval of input vector data of the current instruction and a storage interval of output vector data of the previous instruction that has been partially executed are overlapped, where the storage interval is determined according to start addresses and lengths of vector data. If the storage interval of the input vector data of the current instruction and the storage interval of the output vector data of the previous instruction that has been partially executed are overlapped, it means that the current instruction actually needs an execution result of the previous instruction as an input, so the current instruction cannot start execution until the previous instruction that has been partially executed is completed. In this process, the instruction is actually stored in the storage queue module temporarily.

The storage queue module includes an ordered queue. The instruction having the dependency relationship with data of previous instruction is stored in the ordered queue until the dependency relationship is eliminated. The storage queue module is configured to send the random vector generation instruction to the random vector generating unit after the dependency relationship is eliminated.

The random vector generating unit is configured to generate a random vector obeying a specified distribution according to an instruction. The random vector generating unit can be realized by a customized hardware circuit including but not limited to an field-programmable gate array(FPGA), a coarse-grain reconfigurable array (CGRA), an application specific integrated circuit (ASIC), an analog circuit, a memristor and the like.

The scratchpad memory can be a temporary storage apparatus special for vector data and can support vector data of different sizes. The scratchpad memory is configured to store random vectors generated.

The IO access module is configured to read out data from the scratchpad memory or write data into the scratchpad memory by directly accessing the scratchpad memory..

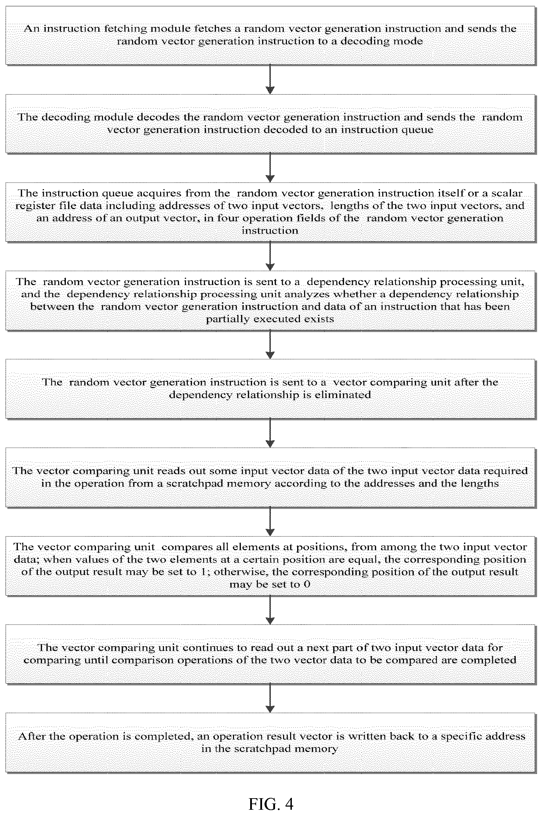

FIG. 4 is a schematic flow chart illustrating a process of generating a random vector obeying a uniform distribution by the apparatus according to an embodiment of the present disclosure. As illustrated in FIG. 4, a process of executing a uniform distribution instruction begins at S1.

At S1, an instruction fetching module fetches a random number generating instruction, and sends the random number generating instruction to a decoding module.

At S2, the decoding module decodes the random number generating instruction and sends the random number generating instruction decoded to an instruction queue.

At S3, in the instruction queue, the random number generating instruction acquires scalar data in four operation fields in the random number generating instruction from the random number generating instruction itself or a scalar register file. The scalar data include a storage address and a length of the random vector generated, an upper limit and a lower limit of a uniform distribution.

At S4, after the required scalar data are acquired, the random number generating instruction is sent to a dependency relationship processing unit.

At S5, the dependency relationship processing unit determines whether the random number generating instruction has a dependency relationship with an instruction that has been partially executed. If yes, the dependency relationship processing unit sends the random number generating instruction to a storage queue module to wait until the random number generating instruction has no dependency relationship with data of the instruction that has been partially executed; otherwise, the dependency relationship processing unit directly sends the random number generating instruction to a random vector generating unit.

At S6, the random vector generating unit generates a random vector that has a specified length and obeys the uniform distribution through a hardware circuit according to upper limit parameters and lower limit parameters.

At S7, the random vector generating unit continues to generate a random vector of a certain length until generating a random vector of a specified length.

At S8, after the operation is completed, a result vector is written back to a specified address of the scratchpad memory.

In summary, the apparatus for generating a random vector, cooperated with the corresponding instructions, which can solve more and more calculation task for generating random vectors obeying a specified distribution in the current computer field with the corresponding instructions. Compared with the existing related solutions, the disclosure can have the advantages of convenient use, flexible vector length supported, and sufficient on-chip cache.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. An apparatus for generating random vectors, the apparatus comprising:
a storing unit, configured to store vector data associated with a random vector generation instruction;
a register unit, configured to store scalar data associated with the random vector generation instruction;
a control unit, configured to decode the random vector generation instruction and to control an execution process of the random vector generation instruction; and
a random vector generating unit, configured to generate a random vector obeying a specified distribution according to the random vector generation instruction decoded;
the random vector generating unit being a customized hardware circuit and wherein the scalar data stored in the register unit comprise a storage address of a random vector, a length of the random vector, and distribution parameters associated with the random vector generation instruction; wherein the storage address of the random vector is an address in the storing unit.

2. The apparatus of claim 1, wherein the control unit comprises:
an instruction queue module, configured to sequentially store the random vector generation instruction decoded and to acquire scalar data associated with the random vector generation instruction.

3. The apparatus of claim 1, wherein the control unit comprises:
a dependency relationship processing unit, configured to determine whether a current random vector generation instruction has a dependency relationship with an operation instruction that has been partially executed, before the random vector generating unit acquires the current random vector generation instruction.

4. The apparatus of claim 1, wherein the control unit comprises:
a storage queue module, configured to temporarily store a current random vector generation instruction when the current random vector generation instruction has a dependency relationship with an operation instruction that has been partially executed, and to send the current random vector generation instruction temporarily stored to the random vector generating unit when the dependency relationship is eliminated.

5. The apparatus of any of claims 1 to 4, further comprising:
an instruction cache unit, configured to store a random vector generation instruction to be executed; and
an input-output (10) unit, configured to store the vector data associated with the random vector generation instruction in the storing unit, or to acquire the vector data associated with the random vector generation instruction from the storing unit.

6. The apparatus of claim 1, wherein the random vector generation instruction comprises:
an operation code is configured to indicate to execute an operation of generating a random vector obeying a specified distribution; and
an operation field comprising at least one of an immediate and a register number and configured to indicate the scalar data associated with the random vector generation instruction;
the register number being configured to point to an address of the register unit.

7. The apparatus of any of claims 1 to 4 and 6, wherein the storing unit is a scratchpad memory.

8. The apparatus of claim 6, wherein the specified distribution is one of a Gaussian distribution, GAUS, and a uniform distribution, UNIF;
wherein the apparatus is configured to retrieve a size and a storage address of a random vector to be generated from the random vector generation instruction or from the register unit;
wherein the random vector generating unit is configured to generate the random vector obeying the specified distribution, the random vector having a length according to the retrieved size, and writes the generated random vector to the retrieved storage address of the storing unit;
wherein, for the case that the specified distribution is GAUS, the random vector is generated by:
the apparatus retrieving a mean parameter and a variance parameter of a Gaussian distribution from the random vector generation instruction or from the register unit, wherein the random vector generating unit generates the random vector obeying the Gaussian distribution according to the mean parameter and the variance parameter;
wherein, for the case that the specified distribution is UNIF, the random vector is generated by:
the apparatus retrieving an upper limit parameter and a lower limit parameter of a uniform distribution from the random vector generation instruction or from the register unit, wherein the random vector generating unit generates the random vector obeying the uniform distribution according to the upper limit parameter and a lower limit parameter.

9. The apparatus of any one of claims 1-8, wherein the random vector generating unit comprises a linear feedback shift register, LFSR, module and a Ziggurat algorithm module, wherein the LFSR module is configured to generate random numbers by detecting thermal noise of resistors.

10. The apparatus of any one of claims 1-8, wherein the scalar data comprises one or more from the list of: an upper limit of a uniform distribution, a lower limit of a uniform distribution, means and variances of a Gaussian distribution, a size of a random vector, and a storage address of the random vector.

11. A method for generating random vectors by an apparatus, the method comprising:
storing, by a storing unit, vector data associated with a random vector generation instruction;
storing, by a register unit, scalar data associated with the random vector generation instruction;
decoding, by a control unit, the random vector generation instruction;
controlling, by the control unit, an execution process of the random vector generation instruction;
generating, by a random vector generating unit being a customized hardware circuit, a random vector obeying a specified distribution according to the random vector generation instruction decoded; wherein the scalar data being stored in the register unit comprise a storage address of a random vector, a length of the random vector, and distribution parameters associated with the random vector generation instruction; wherein the storage address of the random vector is an address in the storing unit.

12. The method of claim 11, further comprising:
storing sequentially, by an instruction queue module, the random vector generation instruction decoded and acquiring the scalar data associated with the random vector generation instruction.

13. The method of claim 11, further comprising:
determining, by a dependency relationship processing unit, whether a current random vector generation instruction has a dependency relationship with an operation instruction that has been partially executed, before the random vector generating unit acquires the current random vector generation instruction.

14. The method of claim 11, further comprising:
temporarily storing, by a storage queue module, a current random vector generation instruction when the current random vector generation instruction has a dependency relationship with an operation instruction that has been partially executed, and sending the current random vector generation instruction temporarily stored to the random vector generating unit when the dependency relationship is eliminated.

15. The method of claim 11, the random vector generation instruction comprises:
an operation code is configured to indicate to execute an operation of generating a random vector obeying a specified distribution; and
an operation field comprising at least one of an immediate and a register number and configured to indicate the scalar data associated with the random vector generation instruction;
the register number being configured to point to an address of the register unit;
wherein the specified distribution is one of a Gaussian distribution, GAUS, and a uniform distribution, UNIF;
wherein the method further comprises:
retrieving, by the apparatus, a size and a storage address of a random vector to be generated from the random vector generation instruction or from the register unit,
generating, by the random vector generating unit, the random vector obeying the specified distribution, the random vector having a length according to the retrieved size, and writing, by the random vector generating unit, the generated random vector to the retrieved storage address of the storing unit;
wherein, for the case that the specified distribution is GAUS, the step of generating the random vector comprises:
retrieving, by the apparatus, a mean parameter and a variance parameter of a Gaussian distribution from the random vector generation instruction or from the register unit, and generating, by the random vector generating unit, the random vector obeying the Gaussian distribution according to the mean parameter and the variance parameter;
wherein, for the case that the specified distribution is UNIF, the step of generating the random vector comprises:
retrieving, by the apparatus, an upper limit parameter and a lower limit parameter of a uniform distribution from the random vector generation instruction or from the register unit, and generating, by the random vector generating unit, the random vector obeying the uniform distribution according to the upper limit parameter and a lower limit parameter.

## Patentansprüche

1. Vorrichtung zum Erzeugen von Zufallsvektoren, wobei die Vorrichtung Folgendes umfasst:
eine Speichereinheit, ausgelegt zum Speichern von Vektordaten, die mit einer Zufallsvektorerzeugungsanweisung assoziiert sind;
eine Registereinheit, ausgelegt zum Speichern von Skalardaten, die mit der Zufallsvektorerzeugungsanweisung assoziiert sind;
eine Steuereinheit, ausgelegt zum Decodieren der Zufallsvektorerzeugungsanweisung und zum Steuern eines Ausführungsprozesses der Zufallsvektorerzeugungsanweisung; und
eine Zufallsvektorerzeugungseinheit, ausgelegt zum Erzeugen eines Zufallsvektors, der einer vorgegebenen Verteilung gehorcht, gemäß der decodierten Zufallsvektorerzeugungsanweisung;
wobei die Zufallsvektorerzeugungseinheit eine zugeschnittene Hardwareschaltung ist und wobei die in der Registereinheit gespeicherten Skalardaten eine Speicheradresse eines Zufallsvektors, eine Länge des Zufallsvektors und Verteilungsparameter, die mit der Zufallsvektorerzeugungsanweisung assoziiert sind, umfassen; wobei die Speicheradresse des Zufallsvektors eine Adresse in der Speichereinheit ist.

2. Vorrichtung nach Anspruch 1, wobei die Steuereinheit Folgendes umfasst:
ein Anweisungswarteschlangenmodul, ausgelegt zum sequentiellen Speichern der decodierten Zufallsvektorerzeugungsanweisung und zum Erfassen von mit der Zufallsvektorerzeugungsanweisung assoziierten Skalardaten.

3. Vorrichtung nach Anspruch 1, wobei die Steuereinheit Folgendes umfasst:
eine Abhängigkeitsbeziehung-Verarbeitungseinheit, ausgelegt zum Bestimmen, ob eine aktuelle Zufallsvektorerzeugungsanweisung eine Abhängigkeitsbeziehung mit einer Operationsanweisung, die teilweise ausgeführt wurde, bevor die Zufallsvektorerzeugungseinheit die aktuelle Zufallsvektorerzeugungsanweisung erfasst hat, aufweist.

4. Vorrichtung nach Anspruch 1, wobei die Steuereinheit Folgendes umfasst:
ein Speicherwarteschlangenmodul, ausgelegt zum temporären Speichern einer aktuellen Zufallsvektorerzeugungsanweisung, wenn die aktuelle Zufallsvektorerzeugungsanweisung eine Abhängigkeitsbeziehung mit einer Operationsanweisung, die teilweise ausgeführt wurde, aufweist, und zum Senden der aktuellen Zufallsvektorerzeugungsanweisung, die temporär gespeichert wurde, an die Zufallsvektorerzeugungseinheit, wenn die Abhängigkeitsbeziehung eliminiert wurde.

5. Vorrichtung nach einem der Ansprüche 1 bis 4, ferner Folgendes umfassend:
eine Anweisungscacheeinheit, ausgelegt zum Speichern einer auszuführenden Zufallsvektorerzeugungsanweisung; und
eine Eingabe-Ausgabe-Einheit bzw. EA-Einheit, ausgelegt zum Speichern der mit der Zufallsvektorerzeugungsanweisung assoziierten Vektordaten in der Speichereinheit oder zum Erfassen der mit der Zufallsvektorerzeugungsanweisung assoziierten Vektordaten von der Speichereinheit.

6. Vorrichtung nach Anspruch 1, wobei die Zufallsvektorerzeugungsanweisung Folgendes umfasst:
einen Operationscode, der ausgelegt ist zum Angeben, eine Operation des Erzeugens eines Zufallsvektors, der einer vorgegebenen Verteilung gehorcht, auszuführen; und
ein Operationsfeld, das eine unmittelbare und/oder eine Registernummer umfasst und ausgelegt ist zum Angeben der mit der Zufallsvektorerzeugungsanweisung assoziierten Skalardaten;
wobei die Registernummer dafür ausgelegt ist, auf eine Adresse der Registereinheit zu zeigen.

7. Vorrichtung nach einem der Ansprüche 1 bis 4 und 6, wobei die Speichereinheit ein Scratchpad-Speicher ist.

8. Vorrichtung nach Anspruch 6, wobei die vorgegebene Verteilung eine Gauß-Verteilung, GAUS, oder eine Gleichverteilung, UNIF, ist;
wobei die Vorrichtung ausgelegt ist zum Abrufen einer Größe und einer Speicheradresse eines zu erzeugenden Zufallsvektors aus der Zufallsvektorerzeugungsanweisung oder aus der Registereinheit;
wobei die Zufallsvektorerzeugungseinheit ausgelegt ist zum Erzeugen des Zufallsvektors, der der vorgegebenen Verteilung gehorcht, wobei der Zufallsvektor eine Länge gemäß der abgerufenen Größe aufweist, und zum Schreiben des erzeugten Zufallsvektors an die abgerufene Speicheradresse der Speichereinheit;
wobei, im Falle, dass die vorgegebene Verteilung GAUS ist, der Zufallsvektor dadurch erzeugt wird, dass:
die Vorrichtung einen Mittelwertparameter und einen Varianzparameter einer Gauß-Verteilung aus der Zufallsvektorerzeugungsanweisung oder aus der Registereinheit abruft, wobei die Zufallsvektorerzeugungseinheit den Zufallsvektor, der der Gauß-Verteilung gehorcht, gemäß dem Mittelwertparameter und dem Varianzparameter erzeugt;
wobei, im Falle, dass die vorgegebene Verteilung UNIF ist, der Zufallsvektor dadurch erzeugt wird, dass:
die Vorrichtung einen Obergrenzenparameter und einen Untergrenzenparameter einer Gleichverteilung aus der Zufallsvektorerzeugungsanweisung oder aus der Registereinheit abruft, wobei die Zufallsvektorerzeugungseinheit den Zufallsvektor, der der Gleichverteilung gehorcht, gemäß dem Obergrenzenparameter und einem Untergrenzenparameter erzeugt.

9. Vorrichtung nach einem der Ansprüche 1-8, wobei die Zufallsvektorerzeugungseinheit ein Linearrückkopplung-Schieberegister-Modul bzw. LFSR-Modul und ein Zikkurat-Algorithmus-Modul umfasst, wobei das LFSR-Modul ausgelegt ist zum Erzeugen von Zufallszahlen durch Detektieren von thermischem Rauschen von Widerständen.

10. Vorrichtung nach einem der Ansprüche 1-8, wobei die Skalardaten ein oder mehrere aus der folgenden Liste umfassen: eine Obergrenze einer Gleichverteilung, eine Untergrenze einer Gleichverteilung, Mittelwerte und Varianzen einer Gauß-Verteilung, eine Größe eines Zufallsvektors und eine Speicheradresse des Zufallsvektors.

11. Verfahren zum Erzeugen eines Zufallsvektors durch eine Vorrichtung, wobei das Verfahren Folgendes umfasst:
Speichern, durch eine Speichereinheit, von Vektordaten, die mit einer Zufallsvektorerzeugungsanweisung assoziiert sind;
Speichern, durch eine Registereinheit, von Skalardaten, die mit der Zufallsvektorerzeugungsanweisung assoziiert sind;
Decodieren, durch eine Steuereinheit, der Zufallsvektorerzeugungsanweisung;
Steuern, durch die Steuereinheit, eines Ausführungsprozesses der Zufallsvektorerzeugungsanweisung;
Erzeugen, durch eine Zufallsvektorerzeugungseinheit, die eine zugeschnittene Hardwareschaltung ist, eines Zufallsvektors, der einer vorgegebenen Verteilung gehorcht, gemäß der decodierten Zufallsvektorerzeugungsanweisung; wobei die in der Registereinheit gespeicherten Skalardaten eine Speicheradresse eines Zufallsvektors, eine Länge des Zufallsvektors und Verteilungsparameter, die mit der Zufallsvektorerzeugungsanweisung assoziiert sind, umfassen; wobei die Speicheradresse des Zufallsvektors eine Adresse in der Speichereinheit ist.

12. Verfahren nach Anspruch 11, das ferner Folgendes umfasst:
sequentielles Speichern, durch ein Anweisungswarteschlangenmodul, der decodierten Zufallsvektorerzeugungsanweisung und Erfassen von mit der Zufallsvektorerzeugungsanweisung assoziierten Skalardaten.

13. Verfahren nach Anspruch 11, das ferner Folgendes umfasst:
Bestimmen, durch eine Abhängigkeitsbeziehung-Verarbeitungseinheit, ob eine aktuelle Zufallsvektorerzeugungsanweisung eine Abhängigkeitsbeziehung mit einer Operationsanweisung, die teilweise ausgeführt wurde, bevor die Zufallsvektorerzeugungseinheit die aktuelle Zufallsvektorerzeugungsanweisung erfasst hat, aufweist.

14. Verfahren nach Anspruch 11, das ferner Folgendes umfasst:
temporäres Speichern, durch ein Speicherwarteschlangenmodul, einer aktuellen Zufallsvektorerzeugungsanweisung, wenn die aktuelle Zufallsvektorerzeugungsanweisung eine Abhängigkeitsbeziehung mit einer Operationsanweisung, die teilweise ausgeführt wurde, aufweist, und Senden der aktuellen Zufallsvektorerzeugungsanweisung, die temporär gespeichert wurde, an die Zufallsvektorerzeugungseinheit, wenn die Abhängigkeitsbeziehung eliminiert wurde.

15. Verfahren nach Anspruch 11, wobei die Zufallsvektorerzeugungsanweisung Folgendes umfasst:
einen Operationscode, der ausgelegt ist zum Angeben, eine Operation des Erzeugens eines Zufallsvektors, der einer vorgegebenen Verteilung gehorcht, auszuführen; und
ein Operationsfeld, das eine unmittelbare und/oder eine Registernummer umfasst und ausgelegt ist zum Angeben der mit der Zufallsvektorerzeugungsanweisung assoziierten Skalardaten;
wobei die Registernummer dafür ausgelegt ist, auf eine Adresse der Registereinheit zu zeigen;
wobei die vorgegebene Verteilung eine Gauß-Verteilung, GAUS, oder eine Gleichverteilung, UNIF, ist;
wobei das Verfahren ferner Folgendes umfasst:
Abrufen, durch die Vorrichtung, einer Größe und einer Speicheradresse eines zu erzeugenden Zufallsvektors aus der Zufallsvektorerzeugungsanweisung oder aus der Registereinheit;
Erzeugen, durch die Zufallsvektorerzeugungseinheit, des Zufallsvektors, der der vorgegebenen Verteilung gehorcht, wobei der Zufallsvektor eine Länge gemäß der abgerufenen Größe aufweist, und Schreiben, durch die Zufallsvektorerzeugungseinheit, des erzeugten Zufallsvektors an die abgerufene Speicheradresse der Speichereinheit;
wobei, im Falle, dass die vorgegebene Verteilung GAUS ist, der Schritt des Erzeugens des Zufallsvektors umfasst:
Abrufen, durch die Vorrichtung, eines Mittelwertparameters und eines Varianzparameters einer Gauß-Verteilung aus der Zufallsvektorerzeugungsanweisung oder aus der Registereinheit, und Erzeugen, durch die Zufallsvektorerzeugungseinheit, des Zufallsvektors, der der Gauß-Verteilung gehorcht, gemäß dem Mittelwertparameter und dem Varianzparameter;
wobei, im Falle, dass die vorgegebene Verteilung UNIF ist, der Schritt des Erzeugens des Zufallsvektors umfasst:
Abrufen, durch die Vorrichtung, eines Obergrenzenparameters und eines Untergrenzenparameters einer Gleichverteilung aus der Zufallsvektorerzeugungsanweisung oder aus der Registereinheit, und Erzeugen, durch die Zufallsvektorerzeugungseinheit, des Zufallsvektors, der der Gleichverteilung gehorcht, gemäß dem Obergrenzenparameter und einem Untergrenzenparameter.

## Revendications

1. Appareil de génération de vecteur aléatoire, l'appareil comprenant :
une unité de mémorisation, configurée pour mémoriser des données vectorielles associées à une instruction de génération de vecteur aléatoire ;
une unité de registre, configurée pour mémoriser des données scalaires associées à l'instruction de génération de vecteur aléatoire ;
une unité de commande, configurée pour décoder l'instruction de génération de vecteur aléatoire et commander un processus d'exécution de l'instruction de génération de vecteur aléatoire ; et
une unité de génération de vecteur aléatoire, configurée pour générer un vecteur aléatoire obéissant à une distribution spécifiée conformément à l'instruction de génération de vecteur aléatoire décodée ;
l'unité de génération de vecteur aléatoire étant un circuit matériel personnalisé et dans lequel les données scalaires mémorisées dans l'unité de registre comprennent une adresse de mémorisation d'un vecteur aléatoire, une longueur du vecteur aléatoire et des paramètres de distribution associés à l'instruction de génération de vecteur aléatoire ; l'adresse de mémorisation du vecteur aléatoire étant une adresse dans l'unité de mémorisation.

2. Appareil selon la revendication 1, dans lequel l'unité de commande comprend :
un module de mise en file d'attente d'instructions, configuré pour mémoriser séquentiellement l'instruction de génération de vecteur aléatoire décodée et acquérir des données scalaires associées à l'instruction de génération de vecteur aléatoire.

3. Appareil selon la revendication 1, dans lequel l'unité de commande comprend :
une unité de traitement de relation de dépendance, configurée pour déterminer qu'une instruction de génération de vecteur aléatoire actuelle présente ou non une relation de dépendance avec une instruction d'opération qui a été partiellement exécutée, avant que l'unité de génération de vecteur aléatoire n'acquière l'instruction de génération de vecteur aléatoire actuelle.

4. Appareil selon la revendication 1, dans lequel l'unité de commande comprend :
un module de mise en file d'attente de mémorisation, configuré pour mémoriser temporairement une instruction de génération de vecteur aléatoire actuelle lorsque l'instruction de génération de vecteur aléatoire actuelle présente une relation de dépendance avec une instruction d'opération qui a été partiellement exécutée, et envoyer l'instruction de génération de vecteur aléatoire actuelle mémorisée temporairement à l'unité de génération de vecteur aléatoire lorsque la relation de dépendance est éliminée.

5. Appareil selon l'une quelconque des revendications 1 à 4, comprenant en outre :
une unité de mise en cache d'instructions, configurée pour mémoriser une instruction de génération de vecteur aléatoire à exécuter ; et
une unité d'entrée-sortie (E/S), configurée pour mémoriser les données vectorielles associées à l'instruction de génération de vecteur aléatoire dans l'unité de mémorisation, ou acquérir les données vectorielles associées à l'instruction de génération de vecteur aléatoire à partir de l'unité de mémorisation.

6. Appareil selon la revendication 1, dans lequel l'instruction de génération de vecteur aléatoire comprend :
un code d'opération configuré pour indiquer l'exécution d'une opération de génération d'un vecteur aléatoire obéissant à une distribution spécifiée ; et
un champ d'opération comprenant au moins un numéro immédiat et/ou un numéro de registre et configuré pour indiquer les données scalaires associées à l'instruction de génération de vecteur aléatoire ;
le numéro de registre étant configuré pour pointer vers une adresse de l'unité de registre.

7. Appareil selon l'une quelconque des revendications 1 à 4 et 6, dans lequel l'unité de mémorisation est une mémoire bloc-notes.

8. Appareil selon la revendication 6, dans lequel la distribution spécifiée est une distribution gaussienne, GAUS, ou une distribution uniforme, UNIF ;
l'appareil étant configuré pour récupérer une taille et une adresse de mémorisation d'un vecteur aléatoire à générer à partir de l'instruction de génération de vecteur aléatoire ou de l'unité de registre ;
dans lequel l'unité de génération de vecteur aléatoire est configurée pour générer le vecteur aléatoire obéissant à la distribution spécifiée, le vecteur aléatoire ayant une longueur conforme à la taille récupérée, et écrire le vecteur aléatoire généré à l'adresse de mémorisation récupérée de l'unité de mémorisation ;
dans lequel, dans le cas où la distribution spécifiée est GAUS, le vecteur aléatoire est généré par :
récupération par l'appareil d'un paramètre moyen et d'un paramètre de variance d'une distribution gaussienne à partir de l'instruction de génération de vecteur aléatoire ou de l'unité de registre, l'unité de génération de vecteur aléatoire générant le vecteur aléatoire obéissant à la distribution gaussienne conformément au paramètre moyen et au paramètre de variance ;
dans lequel, dans le cas où la distribution spécifiée est UNIF, le vecteur aléatoire est généré par :
récupération par l'appareil d'un paramètre de limite supérieure et d'un paramètre de limite inférieure d'une distribution uniforme à partir de l'instruction de génération de vecteur aléatoire ou de l'unité de registre, l'unité de génération de vecteur aléatoire générant le vecteur aléatoire obéissant à la distribution uniforme conformément au paramètre de limite supérieure et à un paramètre de limite inférieure.

9. Appareil selon l'une quelconque des revendications 1 à 8, dans lequel l'unité de génération de vecteur aléatoire comprend un module de registre à décalage à rétroaction linéaire, LFSR, et un module d'algorithme Ziggurat, le module LFSR étant configuré pour générer des nombres aléatoires en détectant un bruit thermique de résistances.

10. Appareil selon l'une quelconque des revendications 1 à 8, dans lequel les données scalaires comprennent une ou plusieurs des données suivantes dans la liste consistant en : une limite supérieure d'une distribution uniforme, une limite inférieure d'une distribution uniforme, des moyennes et variances d'une distribution gaussienne, une taille d'un vecteur aléatoire, et une adresse de mémorisation du vecteur aléatoire.

11. Procédé de génération de vecteur aléatoire par un appareil, le procédé comprenant :
la mémorisation, par une unité de mémorisation, de données vectorielles associées à une instruction de génération de vecteur aléatoire ;
la mémorisation, par une unité de registre, de données scalaires associées à l'instruction de génération de vecteur aléatoire ;
le décodage, par une unité de commande, de l'instruction de génération de vecteur aléatoire ;
la commande, par l'unité de commande, d'un processus d'exécution de l'instruction de génération de vecteur aléatoire ;
la génération, par une unité de génération de vecteur aléatoire étant un circuit matériel personnalisé, d'un vecteur aléatoire obéissant à une distribution spécifiée conformément à l'instruction de génération de vecteur aléatoire décodée ; dans lequel les données scalaires mémorisées dans l'unité de registre comprennent une adresse de mémorisation d'un vecteur aléatoire, une longueur du vecteur aléatoire et des paramètres de distribution associés à l'instruction de génération de vecteur aléatoire ; dans lequel l'adresse de mémorisation du vecteur aléatoire est une adresse dans l'unité de mémorisation.

12. Procédé selon la revendication 11, comprenant en outre :
la mémorisation séquentielle, par un module de mise en file d'attente d'instructions, de l'instruction de génération de vecteur aléatoire décodée et l'acquisition des données scalaires associées à l'instruction de génération de vecteur aléatoire.

13. Procédé selon la revendication 11, comprenant en outre :
la détermination, par une unité de traitement de relation de dépendance, qu'une instruction de génération de vecteur aléatoire actuelle présente ou non une relation de dépendance avec une instruction d'opération qui a été partiellement exécutée, avant que l'unité de génération de vecteur aléatoire n'acquière l'instruction de génération de vecteur aléatoire actuelle.

14. Procédé selon la revendication 11, comprenant en outre :
la mémorisation temporaire, par un module de mise en file d'attente de mémorisation, d'une instruction de génération de vecteur aléatoire actuelle lorsque l'instruction de génération de vecteur aléatoire actuelle présente une relation de dépendance avec une instruction d'opération qui a été partiellement exécutée, et l'envoi de l'instruction de génération de vecteur aléatoire actuelle temporairement mémorisée à l'unité de génération de vecteur aléatoire lorsque la relation de dépendance est éliminée.

15. Procédé selon la revendication 11, l'instruction de génération de vecteur aléatoire comprend :
un code d'opération configuré pour indiquer l'exécution d'une opération de génération d'un vecteur aléatoire obéissant à une distribution spécifiée ; et
un champ d'opération comprenant au moins un d'un numéro immédiat et d'un numéro de registre et configuré pour indiquer les données scalaires associées à l'instruction de génération de vecteur aléatoire ;
le numéro de registre étant configuré pour indiquer une adresse de l'unité de registre ;
dans lequel la distribution spécifiée est une distribution gaussienne, GAUS, ou une distribution uniforme, UNIF ;
le procédé comprenant en outre :
la récupération, par l'appareil, d'une taille et d'une adresse de mémorisation d'un vecteur aléatoire à générer à partir de l'instruction de génération de vecteur aléatoire ou de l'unité de registre,
la génération, par l'unité de génération de vecteur aléatoire, du vecteur aléatoire obéissant à la distribution spécifiée, le vecteur aléatoire ayant une longueur conforme à la taille récupérée, et l'écriture, par l'unité de génération de vecteur aléatoire, du vecteur aléatoire généré à l'adresse de mémorisation récupérée de l'unité de mémorisation ;
dans lequel, dans le cas où la distribution spécifiée est GAUS, l'étape de génération du vecteur aléatoire comprend :
la récupération, par l'appareil, d'un paramètre moyen et d'un paramètre de variance d'une distribution gaussienne à partir de l'instruction de génération de vecteur aléatoire ou de l'unité de registre, et la génération, par l'unité de génération de vecteur aléatoire, du vecteur aléatoire obéissant à la distribution gaussienne conformément au paramètre moyen et au paramètre de variance ;
dans lequel, dans le cas où la distribution spécifiée est UNIF, l'étape de génération du vecteur aléatoire comprend :
la récupération, par l'appareil, d'un paramètre de limite supérieure et d'un paramètre de limite inférieure d'une distribution uniforme à partir de l'instruction de génération de vecteur aléatoire ou de l'unité de registre, et la génération, par l'unité de génération de vecteur aléatoire, du vecteur aléatoire obéissant à la distribution uniforme conformément au paramètre de limite supérieure et à un paramètre de limite inférieure.
